# EUROPEAN PATENT APPLICATION

(11) **EP 4 224 498 A1**
(43) Date of publication of application: **09.08.2023**
(21) Application number: 21875274.9
(22) Date of filing: 17.09.2021
(51) Int. Cl.: H01G 11/12, H01G 11/74, H01G 4/228, H01M 50/20, H01M 50/50

(54) **ELECTRIC POWER STORAGE MODULE**

(30) Priority: 30.09.2020 JP 2020164747
(71) Applicant: Panasonic Intellectual Property Management Co., Ltd., Osaka-shi, Osaka 540-6207 (JP)
(72) Inventor: MURATSU, Jiro, Osaka-shi, Osaka 540-6207 (JP); OGINO, Hirotaka, Osaka-shi, Osaka 540-6207 (JP); TAKASAKI, Hiroshi, Osaka-shi, Osaka 540-6207 (JP); HIRANO, Tatsuya, Osaka-shi, Osaka 540-6207 (JP); NAGATA, Keisuke, Osaka-shi, Osaka 540-6207 (JP)
(74) Representative: Novagraaf International SA
(86) International application number: PCT/JP2021/034223
(87) International publication number: WO 2022/070972

(57) **Abstract**

An electric power storage module includes at least one cylindrical electric power storage device. A positive-electrode terminal and a negative-electrode terminal are disposed at an upper end of the electric power storage device, the negative-electrode terminal is disposed on an outer side with respect to the positive-electrode terminal in a radial direction of the electric power storage device, a negative-electrode lead electrically connected to the negative-electrode terminal from an outer side in the radial direction is further provided, and the negative-electrode lead includes a contact part that is in contact with a side surface of the electric power storage device, and a shoulder that is formed on an inner side in the radial direction with respect to the contact part and includes a joint.

## Description

### TECHNICAL FIELD

The present disclosure relates to an electric power storage module.

### BACKGROUND ART

Conventionally, an electric power storage module is known as a power source including a plurality of electric power storage devices. For example, the electric power storage module disclosed in PTL 1 includes a plurality of cylindrical batteries. In this cylindrical battery, a sealing body is configured as a positive-electrode terminal, an outer covering can is configured as a negative-electrode terminal, and a negative-electrode lead is joined to a shoulder (swaged opening end) of the outer covering can.

### Citation List

### Patent Literature

PTL 1: U.S. Patent No. 10,707,471

### SUMMARY OF THE INVENTION

### Technical problem

However, it is necessary to secure an insulation distance between the negative-electrode lead and the positive-electrode terminal, and it is necessary to align a position of the negative-electrode lead to an appropriate joining position in the outer covering can with high accuracy when the negative-electrode lead is joined to the outer covering can.

An object of the present disclosure is to provide an electric power storage module capable of aligning a position of a lead to an appropriate joining position in an outer covering can with high accuracy as in the negative-electrode lead. Solution to problem

An electric power storage module according to one aspect of the present disclosure includes at least one cylindrical electric power storage device. A first terminal and a second terminal are disposed at an end on one side of the electric power storage device, the second terminal is disposed on an outer side with respect to the first terminal in a radial direction of the electric power storage device, a lead electrically connected to the second terminal from an outer side in the radial direction is further provided, and
the lead includes a contact part that is in contact with a side surface of the electric power storage device, and a shoulder that is formed on an inner side in the radial direction with respect to the contact part and includes a joint to the second terminal.

### Advantageous effect of invention

According to one aspect of the present disclosure, the position of the lead can be aligned with the appropriate joining position in the second terminal with high accuracy. As a result, it is possible to reduce an attachment tolerance between the second terminal and the lead.

### BRIEF DESCRIPTION OF THE DRAWINGS

Fig. 1 is a side sectional view illustrating an electric power storage module according to an exemplary embodiment.
Fig. 2 is a perspective view illustrating a current collector according to the exemplary embodiment.
Fig. 3 is a cross-sectional view illustrating an electric power storage device and an upper holder according to the exemplary embodiment and a negative-electrode lead according to a first exemplary embodiment.
Fig. 4 is a plan view illustrating the negative-electrode lead according to the first exemplary embodiment.
Fig. 5 is a perspective view illustrating the negative-electrode lead according to the first exemplary embodiment.
Fig. 6 is a cross-sectional view illustrating the electric power storage device and the upper holder according to the exemplary embodiment and a negative-electrode lead according to a second exemplary embodiment.
Fig. 7 is a plan view illustrating the negative-electrode lead according to the second exemplary embodiment.
Fig. 8 is a perspective view illustrating the negative-electrode lead according to the second exemplary embodiment.
Fig. 9 is a cross-sectional view illustrating the electric power storage device and the upper holder according to the exemplary embodiment and a negative-electrode lead according to a third exemplary embodiment.
Fig. 10 is a plan view illustrating the negative-electrode lead according to the third exemplary embodiment.
Fig. 11 is a perspective view illustrating the negative-electrode lead according to the third exemplary embodiment.

### DESCRIPTION OF EMBODIMENT

Hereinafter, exemplary embodiments of the present disclosure will be described with reference to the drawings. Shapes, materials, and numbers to be described below are examples, and can be appropriately changed according to specifications of an electric power storage module.

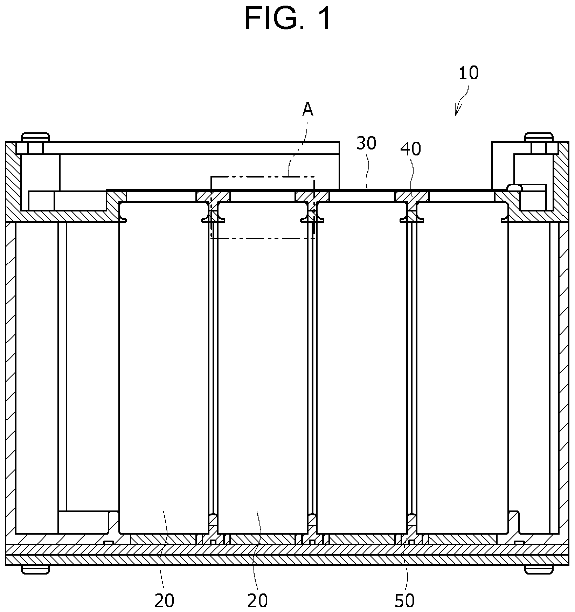

Electric power storage module 10 of an exemplary embodiment will be described with reference to Fig. 1. Fig. 1 is a side sectional view illustrating electric power storage module 10. Hereinafter, a side where upper holder 40 as a holder holds electric power storage devices 20 with respect to electric power storage module 10 and electric power storage devices 20 will be described as an upper side in a vertical direction. However, upper holder 40 may be a lower side of electric power storage module 10.

Electric power storage module 10 is mainly used as a power source for power. Electric power storage module 10 is used as a power source of an electric device driven by a motor such as an electric car, an electric power tool, an electric power-assisted bicycle, an electric motorcycle, an electric wheelchair, an electric tricycle, or an electric cart. However, the application of electric power storage module 10 is not limited, and the electric power storage module 10 be used as a power source of various electric devices used indoors and outdoors, such as a cleaner, a wireless device, a lighting device, a digital camera, and a video camera.

In Fig. 1, electric power storage module 10 includes a plurality of cylindrical electric power storage devices 20, current collectors 30 that collect current from first terminals (positive-electrode terminals) and second terminals (negative-electrode terminals) of electric power storage devices 20, upper holder 40 as a holder that holds upper end sides of the plurality of electric power storage devices 20, and lower holder 50 that holds lower end sides of the plurality of electric power storage devices 20. Details of current collector 30 and upper holder 40 will be described later.

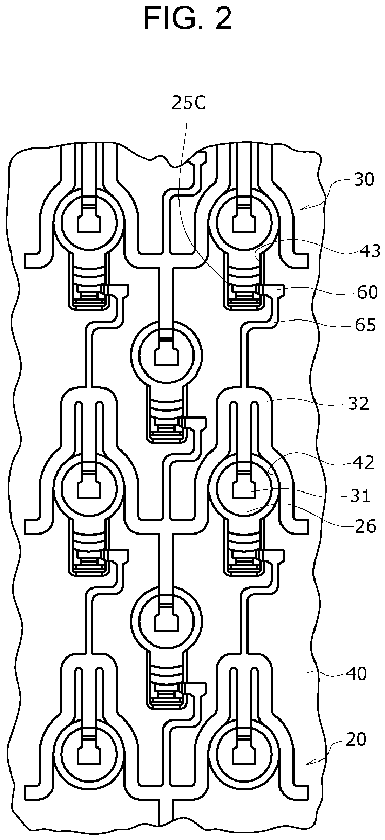

Current collector 30 according to the exemplary embodiment will be described with reference to Fig. 2. Fig. 2 is a plan view illustrating current collector 30.

Current collector 30 is made of a plate-shaped metal material (metal foil), and is provided on a top surface of upper holder 40. In current collector 30, positive-electrode lead 31 connected to a positive-electrode terminal of electric power storage device 20, coupling part 32 coupling positive-electrode leads 31 to each other, and negative-electrode lead 60 as a lead connected to a negative-electrode terminal of electric power storage device 20 are formed. Negative-electrode lead 60 includes fuse 65 that couples negative-electrode lead 60 and coupling part 32. Details of negative-electrode lead 60 will be described later.

Positive-electrode lead 31 extends above opening 42 of upper holder 40 to be described later and is joined to a top surface of sealing body 26 as a positive-electrode terminal to be described later. Coupling part 32 is formed in a strip shape or a sheet shape. Negative-electrode lead 60 extends above cutout 43 of upper holder 40 to be described later and is joined to shoulder 25C of outer covering can 25 as a negative-electrode terminal to be described later. fuse 65 is formed in a strip shape narrower than coupling part 32, and is provided without overlapping opening 42 and cutout 43 of upper holder 40. Note that, in the electric power storage device of the present disclosure, fuse 65 may not be provided.

According to current collector 30, since a function of connecting the positive-electrode terminal and the negative-electrode terminal of electric power storage device 20 and a function of collecting the current of the plurality of electric power storage devices 20 are realized by one metal foil, a loss of the current collection can be suppressed to be small. In addition, according to current collector 30, since the current collector is made of one metal foil, it is possible to accurately process the current collector at low cost by etching or the like.

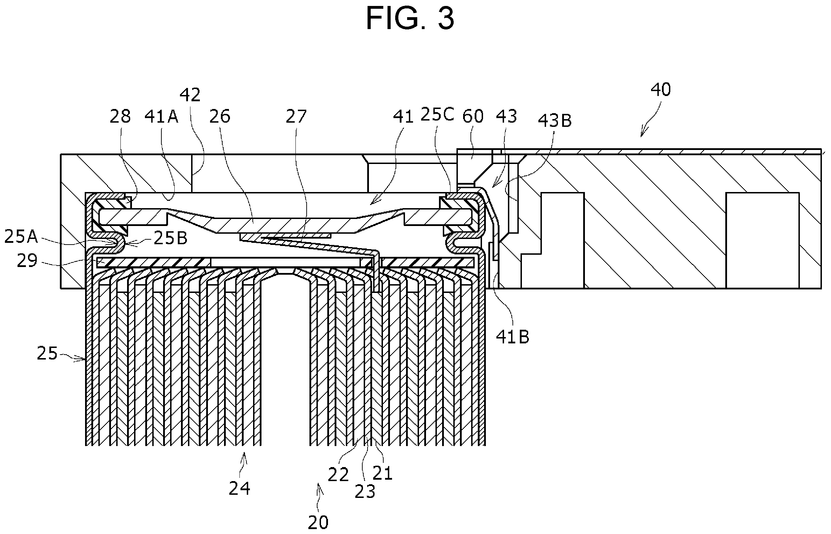

Electric power storage device 20 according to the exemplary embodiment will be described with reference to Fig. 3. Fig. 3 is a detailed view of part A in Fig. 1. Hereinafter, each member will be described in accordance with a radial direction and a circumferential direction of the cylindrical shape of electric power storage device 20.

Electric power storage device 20, a cylindrical lithium ion secondary battery is used. Electric power storage device 20 is not limited to the lithium ion secondary battery, and may be a nickel metal hydride battery, a capacitor, or the like.

Although details will be described later, in electric power storage device 20, a positive-electrode terminal as a first terminal and a negative-electrode terminal as a second terminal are disposed at an upper end. The negative-electrode terminal is disposed to surround a periphery of the positive-electrode terminal, and thus, the negative-electrode terminal is disposed on a radially outer side of the positive-electrode terminal. More specifically, the positive-electrode terminal is formed on the top surface of sealing body 26 to be described later. In addition, the negative-electrode terminal is formed at a swaged opening end (hereinafter, shoulder 25C) of outer covering can 25 to be described later.

Electric power storage device 20 includes, for example, electrode group 24 in which strip-shaped positive electrode 21 and strip-shaped negative electrode 22 are wound in with strip-shaped separator 23 interposed therebetween, cylindrical outer covering can 25 containing electrode group 24 together with an electrolyte solution, sealing body 26 sealing an opening of outer covering can 25 in an insulated state, foil-shaped positive electrode tab 27 electrically connecting positive electrode 21 and sealing body 26, and a negative electrode tab (not illustrated) electrically connecting negative electrode 22 and outer covering can 25. Insulating gasket 28 is disposed between an outer periphery of sealing body 26 and an inner peripheral surface of the opening of outer covering can 25. In electric power storage device 20, positive electrode tab 27 may be connected to outer covering can 25, and the negative electrode tab may be connected to sealing body 26. In this case, the second terminal is a positive-electrode terminal. A lead used as negative-electrode lead 60 is used as a positive-electrode lead.

Annular groove 25A is formed on the opening side of an outer peripheral surface of outer covering can 25. In groove 25A, annular protrusion 25B is formed on the inner peripheral surface of corresponding outer covering can 25. Gasket 28 and sealing body 26 are disposed on annular protrusion 25B in outer covering can 25. Further, shoulder 25C of outer covering can 25 is swaged to fall down toward an inside of outer covering can 25 in a state where gasket 28 is disposed on an inner peripheral side. Sealing body 26 is sandwiched by swaged shoulder 25C in the vertical direction and protrusion 25B with gasket 28 interposed therebetween, and thus, the opening of outer covering can 25 is sealed.

Note that shoulder 25C is not limited to the above-described configuration. For example, a terminal plate may be provided at a central part of sealing body 26 and a conductive joint may be disposed on an outermost periphery of sealing body 26 in a state of being insulated from the terminal plate, and the opening of outer covering can 25 may be sealed by welding and joining the opening end and the joint. At this time, negative-electrode lead 60 may be connected to a top surface of the joint.

Sealing body 26 may be provided with a current interruption mechanism (CID) or an exhaust valve that ruptures when the inside of outer covering can 25 reaches a predetermined pressure or more. In addition, insulating plate 29 for insulating electrode group 24 from outer covering can 25 may be provided between electrode group 24 and protrusion 25B. When insulating plate 29 is provided, positive electrode tab 27 may extend through a through-hole formed in insulating plate 29. Further, an insulating plate for insulating electrode group 24 from outer covering can 25 may be provided between electrode group 24 and a bottom of outer covering can 25. The negative electrode tab may pass through the through-hole formed in the insulating plate or may extend while bypassing the insulating plate.

In electric power storage device 20, as described above, the positive-electrode terminal is formed on the top surface of sealing body 26, and positive-electrode lead 31 (see Fig. 2) connected to a positive electrode collector foil is joined. In addition, in electric power storage device 20, as described above, the negative-electrode terminal is formed on swaged shoulder 25C of outer covering can 25, and the negative electrode tab connected to a negative electrode collector foil is joined to the bottom of outer covering can 25. Negative-electrode lead 60 is joined to shoulder 25C of outer covering can 25 from the outer side of electric power storage device 20 in the radial direction.

Upper holder 40 according to the exemplary embodiment will be described with reference to Fig. 3.

Upper holder 40 is a member that holds upper end sides of the plurality of electric power storage devices 20. Upper holder 40 is made of thermoplastic resin. The thermoplastic resin is roughly classified into general-purpose plastics and engineering plastics, and polyethylene, polypropylene, polyamide, ABS, and the like are used.

In Fig. 3, a plurality of containers 41 in which the upper end sides of the electric power storage devices 20 are contained are formed on a bottom surface of upper holder 40. The upper end sides of electric power storage devices 20 are held by upper holder 40 by fitting the upper end sides of electric power storage devices 20 into containers 41.

Container 41 is formed on the bottom surface of upper holder 40 as a recess including ceiling part 41A including a bottom surface facing an upper end surface of electric power storage device 20 and wall 41B including an inner peripheral surface facing a side peripheral surface of electric power storage device 20. Opening 42 through which the top surface of sealing body 26 of electric power storage device 20 is exposed from an upper surface of upper holder 40, and cutout 43 through which shoulder 25C of outer covering can 25 of electric power storage device 20 is exposed from the upper surface of upper holder 40 are formed around container 41.

Opening 42 is a part where ceiling part 41A of container 41 is opened in a circular shape. A diameter of opening 42 is formed to be smaller than an inner diameter of wall 41B. According to opening 42, the top surface of sealing body 26 of electric power storage device 20 is exposed from the upper surface of upper holder 40. Therefore, the top surface of sealing body 26 and the positive-electrode lead 31 can be joined with opening 42 interposed therebetween. In addition, a bottom of ceiling part 41A may be in contact with electric power storage device 20.

cutout 43 is a part formed by cutting out a part of an edge of opening 42. According to cutout 43, a part of shoulder 25C of outer covering can 25 of electric power storage device 20 can be exposed from the upper surface of upper holder 40. An inner peripheral surface of cutout 43 (a surface parallel to wall 41B of container 41) is defined as wall 43B.

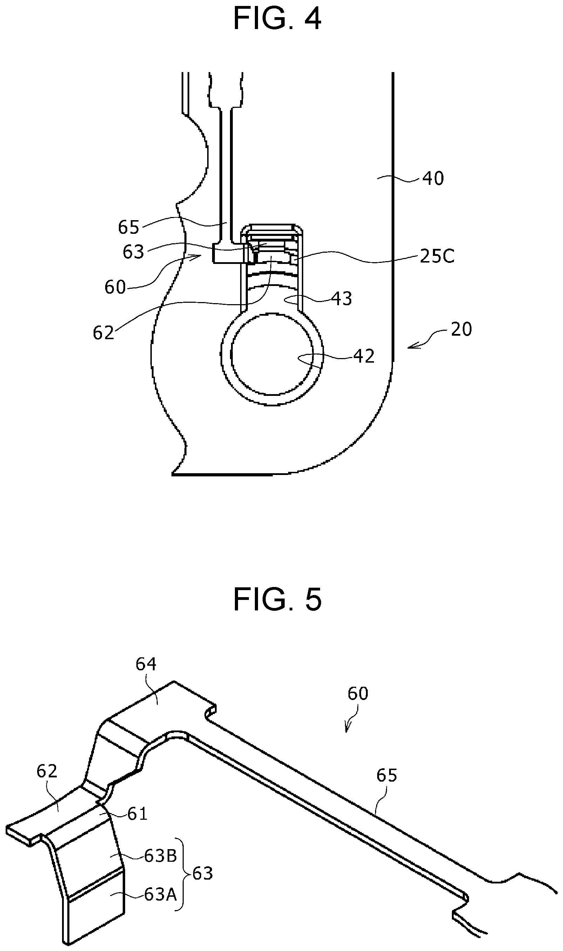

Negative-electrode lead 60 according to a first exemplary embodiment will be described with reference to Figs. 3 to 5. Fig. 4 is a plan view of part A in Fig. 1. Fig. 5 is a perspective view of negative-electrode lead 60.

In Fig. 3, as described above, negative-electrode lead 60 is connected to shoulder 25C (negative-electrode terminal) of outer covering can 25 of electric power storage device 20 exposed from cutout 43 of upper holder 40. Negative-electrode lead 60 can be applied to either electric power storage module 10 including upper holder 40 or electric power storage module 10 including lower holder 50, but an example in which the negative-electrode lead is applied to electric power storage module 10 including upper holder 40 will be described below.

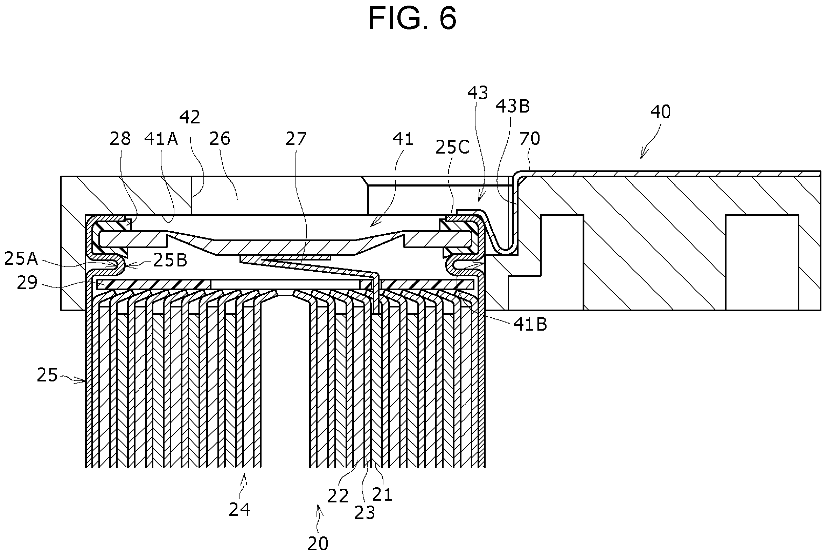

In Figs. 5 and 6, negative-electrode lead 60 includes contact part 61 in contact with a side surface of electric power storage device 20, lead shoulder 62 as a shoulder that is formed on an inner side in the radial direction with respect to contact part 61 and includes a part joined to shoulder 25C of outer covering can 25, and biasing part 63 that is formed on an outer side in the radial direction with respect to contact part 61 and biases contact part 61 and lead shoulder 62 toward the inner side in the radial direction.

As described above, contact part 61 is in contact with the side surface of electric power storage device 20. More specifically, contact part 61 is in contact with a side surface of an upper end of outer covering can 25. When the upper end of outer covering can 25 is formed in an R shape, contact part 61 may be formed to be in contact following the R shape.

Lead shoulder 62 is continuously formed on the inner side in the radial direction with respect to contact part 61, and includes a part that is in contact with shoulder 25C of outer covering can 25 and is joined to shoulder 25C of outer covering can 25 as described above. An inner end position of lead shoulder 62 in the radial direction is preferably the same position as an inner end position of shoulder 25C of outer covering can 25 in the radial direction when contact part 61 is in contact with the side surface of the upper end of outer covering can 25.

In this example, rising part 64 formed to be inclined toward the top surface of upper holder 40 is connected to one side of lead shoulder 62 in the circumferential direction. Rising part 64 is connected to fuse 65 on the top surface of upper holder 40.

Biasing part 63 extends from contact part 61 and is continuously formed on the outer side in the radial direction with respect to contact part 61 as described above, and biases contact part 61 and lead shoulder 62 toward the inner side in the radial direction. Biasing part 63 is formed by using holder contact part 63A that is in contact with wall 41B (a surface intersecting with an end of electric power storage device 20) of container 41 of upper holder 40, and connecting part 63B that is inclined from holder contact part 63A and is connected to contact part 61. As a result, biasing part 63 is formed as a leaf spring including holder contact part 63A and connecting part 63B, and biases contact part 61 against wall 41B of container 41 of upper holder 40.

According to biasing part 63, contact part 61 and lead shoulder 62 are biased toward the inner side in the radial direction with respect to upper holder 40, and thus, contact part 61 can be in contact with the side surface of the upper end of outer covering can 25. As a result, a position of lead shoulder 62 in shoulder 25C of outer covering can 25 is determined. In other words, a gap variation between upper holder 40 and electric power storage device 20 and an attachment tolerance between outer covering can 25 and negative-electrode lead 60 are absorbed by biasing part 63.

According to negative-electrode lead 60, a position of negative-electrode lead 60 can be aligned with an appropriate joining position of shoulder 25C of outer covering can 25 with high accuracy. As a result, the attachment tolerance between outer covering can 25 and negative-electrode lead 60 can be reduced, and a joining region between outer covering can 25 and negative-electrode lead 60 can be increased. Further, the joining region between outer covering can 25 and negative-electrode lead 60 is increased, and thus, the accuracy of the alignment of a joining tool can be relaxed. Accordingly, the efficiency of a joining operation can be improved. In addition, since biasing part 63 extends downward from lead shoulder 62, it is possible to suppress hindrance of the joining operation even though the joining tool larger than lead shoulder 62 is used. In addition, since biasing part 63 is in contact with wall 41B, when biasing part 63 biases negative-electrode lead 60 the side surface of electric power storage device 20, the deformation of negative-electrode lead 60 on coupling part 32 side with respect to lead shoulder 62 is easily suppressed.

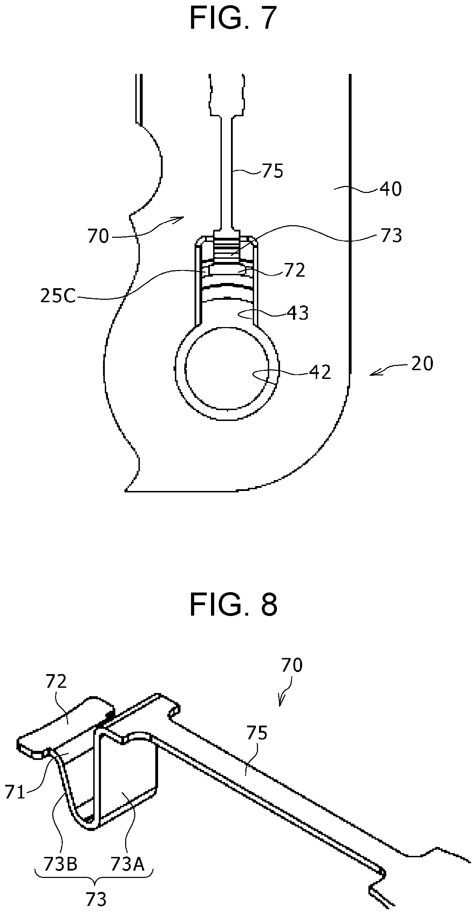

Negative-electrode lead 70 according to a second exemplary embodiment will be described with reference to Figs. 6 to 8. Fig. 6 is a detailed view of part A in Fig. 1. Fig. 7 is a plan view of part A in Fig. 1. Fig. 8 is a perspective view of negative-electrode lead 70.

In Fig. 6, as described above, negative-electrode lead 70 is connected to shoulder 25C (negative-electrode terminal) of outer covering can 25 of electric power storage device 20 exposed from cutout 43 of upper holder 40. Since the details of upper holder 40 and electric power storage device 20 are described above, the description thereof is omitted.

In Figs. 7 and 8, negative-electrode lead 70 includes contact part 71 in contact with the side surface of electric power storage device 20, lead shoulder 72 as a shoulder that is formed on an inner side in the radial direction with respect to contact part 71 and includes a part joined to shoulder 25C of outer covering can 25, and biasing part 73 that is formed on an outer side in the radial direction with respect to contact part 71 and biases contact part 71 and lead shoulder 72 toward the inner side in the radial direction.

As described above, contact part 71 is in contact with the side surface of electric power storage device 20. More specifically, contact part 71 is in contact with a side surface of the upper end of outer covering can 25. When the upper end of outer covering can 25 is formed in an R shape, contact part 71 may be formed to be in contact following the R shape.

Lead shoulder 72 is continuously formed on the inner side in the radial direction with respect to contact part 71, and includes a part that is in contact with shoulder 25C of outer covering can 25 and is joined to shoulder 25C of outer covering can 25 as described above. An inner end position of lead shoulder 72 in the radial direction is preferably the same position as the inner end position of shoulder 25C of outer covering can 25 in the radial direction when contact part 71 is in contact with the side surface of the upper end of outer covering can 25.

As described above, biasing part 73 is continuously formed on the outer side of contact part 71 in the radial direction, and biases contact part 71 and lead shoulder 72 toward the inner side in the radial direction. Biasing part 73 includes holder contact part 73A that is in contact with wall 43B of cutout 43 of upper holder 40, and connecting part 73B that is bent from holder contact part 73A and is connected to contact part 71. As a result, biasing part 73 is formed as a substantially V-shaped (or U-shaped) leaf spring including holder contact part 73A and connecting part 73B, and biases contact part 61 against wall 43B of container 41 of upper holder 40.

In this example, the upper end of holder contact part 73A is formed to extend to the top surface of upper holder 40, and the upper end of holder contact part 73A is connected to negative-electrode lead connecting part 75 on the top surface of upper holder 40.

According to biasing part 73, contact part 71 and lead shoulder 72 are biased toward the inner side in the radial direction with respect to upper holder 40, contact part 71 can be in contact with the side surface of the upper end of outer covering can 25. As a result, a position of lead shoulder 72 in shoulder 25 C of outer covering can 25 is determined. In other words, a gap variation between upper holder 40 and electric power storage device 20 and an attachment tolerance between outer covering can 25 and negative-electrode lead 60 are absorbed by biasing part 63.

According to negative-electrode lead 70, a position of negative-electrode lead 70 can be aligned with an appropriate joining position of shoulder 25C of outer covering can 25 with high accuracy. As a result, an attachment intersection between outer covering can 25 and negative-electrode lead 70 can be reduced, and a joining region between outer covering can 25 and negative-electrode lead 70 can be increased. Further, the joining region between outer covering can 25 and negative-electrode lead 70 are increased, and thus, the accuracy of the alignment of a joining tool can be relaxed. Accordingly, the efficiency of a joining operation can be improved. In addition, similarly to biasing part 63, since biasing part 73 also extends downward from lead shoulder 72 when the biasing part extends to the outer side in the radial direction from contact part 71, it is easy to use a large joining tool. In addition, since biasing part 73 is in contact with wall 43B, when biasing part 73 biases negative-electrode lead 70 the side surface of electric power storage device 20, the deformation of negative-electrode lead 70 closer to coupling part 32 than biasing part 73 is easily suppressed. Further, biasing part 73 is configured to become thinner from the top surface toward the bottom surface of upper holder 40. Therefore, it is possible to easily insert the biasing part into a space in upper holder 40 such as cutout 43.

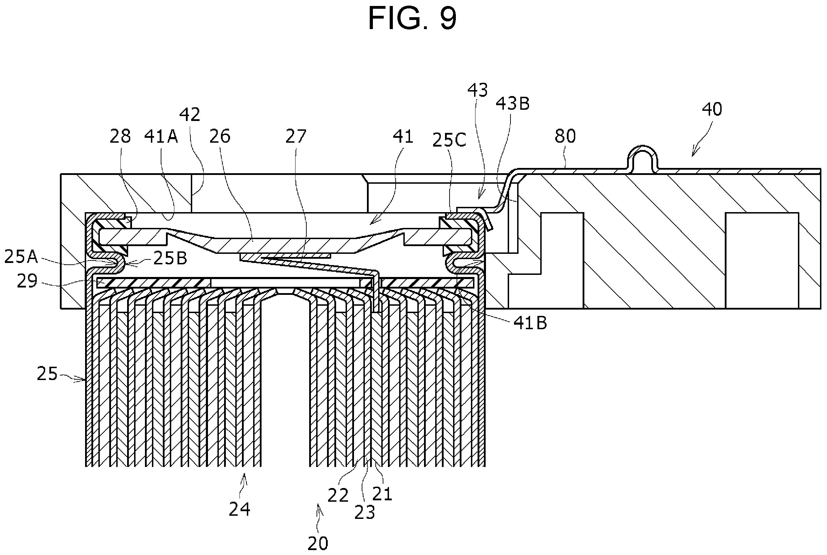

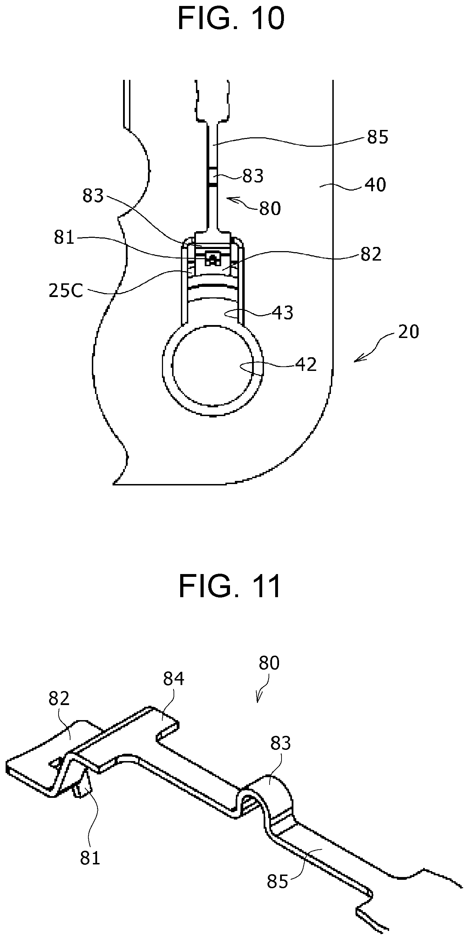

Negative-electrode lead 80 according to a third exemplary embodiment will be described with reference to Figs. 9 to 11. Fig. 9 is a detailed view of part Ain Fig. 1. Fig. 10 is a plan view of part Ain Fig. 1. Fig. 11 is a perspective view of negative-electrode lead 80.

In Fig. 9, as described above, negative-electrode lead 80 is connected to shoulder 25C (negative-electrode terminal) of outer covering can 25 of electric power storage device 20 exposed from cutout 43 of upper holder 40. Since the details of upper holder 40 and electric power storage device 20 are described above, the description thereof is omitted.

In Figs. 10 and 11, negative-electrode lead 80 includes contact part 81 in contact with the side surface of electric power storage device 20, lead shoulder 82 as a shoulder that is formed on an inner side in the radial direction with respect to contact part 81 and includes a part joined to shoulder 25C of outer covering can 25, and biasing part 83 that is formed in the middle of fuse 85 to be described later and biases contact part 81 and lead shoulder 82 toward the inner side in the radial direction.

As described above, contact part 81 is in contact with the side surface of electric power storage device 20. More specifically, contact part 81 is in contact with the side surface of the upper end of outer covering can 25. When the upper end of outer covering can 25 is formed in an R shape, contact part 81 may be formed to be in contact following the R shape. contact part 81 is formed to extend from lead shoulder 82.

As described above, lead shoulder 82 is continuously formed on the inner side in the radial direction with respect to contact part 81, and includes a part that is in contact with shoulder 25C of outer covering can 25 and is joined to shoulder 25C of outer covering can 25. An inner end position of lead shoulder 82 in the radial direction is preferably the same position as the inner end position of shoulder 25C of outer covering can 25 in the radial direction when contact part 81 is in contact with the side surface of the upper end of outer covering can 25.

On an outer side of lead shoulder 82 in the radial direction, contact part 81 is connected to a central part in a width (a circumferential direction of electric power storage device 20), and rising parts 84 are connected to both ends in the width direction. Rising part 84 extends to the top surface of upper holder 40 and is connected to fuse 85 connected to coupling part 32 of current collector 30 on the top surface of upper holder 40.

Biasing part 83 is formed in the middle of fuse 85 as described above, and biases contact part 81 and lead shoulder 82 toward the inner side in the radial direction. In this example, biasing part 83 is formed in an inverted U shape and acts as a leaf spring.

According to biasing part 83, contact part 81 and lead shoulder 82 are biased toward the inner side in the radial direction, and thus, contact part 81 can be in contact with the side surface of the upper end of outer covering can 25. As a result, a position of lead shoulder 82 in shoulder 25C of outer covering can 25 is determined. In other words, a gap variation between upper holder 40 and electric power storage device 20 and an attachment tolerance between outer covering can 25 and negative-electrode lead 60 are absorbed by biasing part 63.

According to negative-electrode lead 80, a position of negative-electrode lead 80 can be aligned with an appropriate joining position of shoulder 25C of outer covering can 25 with high accuracy. As a result, an attachment intersection between outer covering can 25 and negative-electrode lead 80 can be reduced, and a joining region between outer covering can 25 and negative-electrode lead 80 can be increased. Further, the joining region between outer covering can 25 and negative-electrode lead 80 are increased, and thus, the accuracy of the alignment of a joining tool can be relaxed. Accordingly, the efficiency of a joining operation can be improved. In addition, in negative-electrode lead 80 of the present exemplary embodiment, biasing part 83 is not inserted into a space in upper holder 40 such as cutout 43, and biasing part 83 is disposed outside container 41 or cutout 43. Therefore, when lead shoulder 82 is brought close to shoulder 25C in order to cause lead shoulder 82 to be in contact with shoulder 25C, it is possible to reduce a possibility that biasing part 83 rubs against or gets caught by a surface such as cutout 43 to hinder an operation of causing lead shoulder 82 to be in contact with shoulder 25C.

Note that the present invention is not limited to the above-described exemplary embodiments and modified examples thereof, and it is a matter of course that various changes and improvements can be made within the scope of the matters described in the claims of the present application.

### REFERENCE MARKS IN THE DRAWINGS

- 10: electric power storage module

- 20: electric power storage device
- 21: positive electrode
- 22: negative electrode
- 23: separator
- 24: electrode group
- 25: outer covering can
- 25A: groove
- 25B: protrusion
- 25C: shoulder
- 26: sealing body
- 27: positive electrode tab
- 28: gasket
- 29: insulating plate
- 30: current collector
- 31: positive-electrode lead
- 32: coupling part
- 40: upper holder
- 41: container
- 41A: ceiling part
- 41B: wall
- 42: opening
- 43: cutout
- 43B: wall
- 50: lower holder
- 60: negative-electrode lead
- 61: contact part
- 62: lead shoulder (shoulder)
- 63: biasing part
- 63A: holder contact part
- 63B: connecting part
- 64: rising part
- 65: fuse
- 70: negative-electrode lead
- 71: contact part
- 72: lead shoulder (shoulder)
- 73: biasing part
- 73A: holder contact part
- 73B: connecting part
- 75: fuse
- 80: negative-electrode lead
- 81: contact part
- 82: lead shoulder (shoulder)
- 83: biasing part
- 84: rising part
- 85: fuse

## Claims

1. An electric power storage module comprising
at least one electric power storage device that is cylindrical, wherein
a first terminal and a second terminal are disposed at an end on one side of each of the at least one electric power storage device,
the second terminal is disposed outside the first terminal in a radial direction of the each of at least one electric power storage device,
a lead electrically connected to the second terminal from outside in the radial direction is further provided, and
the lead includes
a contact part that is in contact with a side surface of the each of at least one electric power storage device, and
a shoulder that is disposed inside the contact part in the radial direction and includes a joint to the second terminal.

2. The electric power storage module according to Claim 1, wherein
the lead further includes a biasing part disposed outside in the radial direction the contact part, and
the biasing part biases the contact part and the shoulder toward inside the each of at least one electric power storage device in the radial direction.

3. The electric power storage module according to Claim 2, further comprising a holder that holds one side of the each of at least one electric power storage device, wherein the biasing part is supported by the holder.

4. The electric power storage module according to Claim 3, wherein
the holder includes a container that contains one side of the each of at least one electric power storage device, and
the biasing part is supported by the holder by being in contact with a wall of the container.

5. The electric power storage module according to Claim 4, wherein the biasing part extends to outside the contact part in the radial direction, and is in contact with a surface of the holder intersecting with the end of the at least one electric power storage device.

6. The electric power storage module according to Claim 4, wherein
the holder includes an opening through which the first terminal is exposed, and a cutout that is disposed around the opening and through which the second terminal is exposed, and
the biasing part is supported by the holder by being in contact with a wall of the cutout.

7. The electric power storage module according to Claim 2, further comprising a holder that holds one side of the each of at least one electric power storage device, wherein the biasing part is provided on a surface on one side of the holder extending in the radial direction.
